# EUROPEAN PATENT APPLICATION

(11) **EP 3 422 540 A1**
(43) Date of publication of application: **02.01.2019**
(21) Application number: 18175095.1
(22) Date of filing: 30.05.2018
(51) Int. Cl.: H02K 15/03, H02K 1/27, H02K 7/18

(54) **A METHOD OF BONDING SEGMENT MAGNETS TO THE INNER CASING OF THE ROTOR BODY AND AN EQUIPMENT FOR CARRYING OUT THIS METHOD**

(30) Priority: 06.06.2017 CZ 20170321
(71) Applicant: SIMETI GROUP LIMITED, London NW10 7FQ (GB)
(72) Inventor: Silhavý, Frantisek, 10300 Praha 10, Kolovraty (CZ); Milata, Milan, 28201 Tismice (CZ)
(74) Representative: Sedlák, Jirí

(57) **Abstract**

The method of bonding segment magnets to the inner casing of the rotor body and the equipment for carrying out this method.

The positioning cylinder (5) provided with 48 grooves (7) is fitted onto the basic magnetic cylinder (3), with the inner diameter of the positioning cylinder (5) being larger than the diameter of the basic magnetic cylinder (3). The segment magnets (4) are installed in grooves (7) side by side with alternating poles and they may also be installed in multiple rows one above the other. The assembly of the basic magnetic cylinder (3) and the positioning cylinder (5) with segment magnets (4) is anchored to the support rod (9) while the other end of the support rod (9) is attached to the centre of the bottom of the support drum (1). The rotor body (2) is connected to the support drum (1) with the demountable joint (8). The surface of the segment magnets (4) is coated with bonding cement (6) and the assembly of the basic magnetic cylinder (3) and the positioning cylinder (5) with the segment magnets (4) is inserted into the rotor body (2), with the outer diameter of the positioning cylinder (5) being smaller than the inner diameter of the rotor body (2). After inserting the basic magnetic cylinder (3) and the positioning cylinder (5), only the basic magnetic cylinder (3) is pushed further into the support drum (10), with the segment magnets (4) being detached from the positioning cylinder (5) and attached to the inner wall of the rotor body (2). After the attachment of the segment magnets (4), the basic magnetic cylinder (3) and the positioning cylinder (5) are pulled in the opposite direction out of the rotor body (2).

## Description

### Technology area

Generator rotors used in wind power plants with magnets installed inside the rotor body.

### Current state of technology

Electric generators are continuously developed to make their operation quieter and the energy transfer more efficient. An important role in these aspects is played by a rotor which is equipped with magnets, for example the segment magnets.

One way of attaching magnets into the rotors is to install the magnets to the inner casing of the rotors, which is labour-intensive and normally it is done manually. The disadvantage of this installation lies in the relatively complex technological production of the rotor. The segment shaped magnets are bonded into the rotor core and are provided with an epoxy-coated glass fabric bandage. However, the spacing of magnets is precision demanding and the vibrations or high temperatures may cause unfastening of the bandage from the magnets. Another major drawback of the currently used method of attaching magnets inside the rotor is the incomplete use of the magnets' capacity. The other solution is to install the magnets on the outer surface of the rotor. However, this type of attachment resists high revolutions only with great difficulty and the magnets can become detached, which is unacceptable in terms of safety and full rotor functionality. Magnets are attached with non-magnetic strap plates and their conductivity causes eddy currents, thereby reducing the efficiency of the entire machine.

The utility model CZ 22451 shows the positioning of permanent magnet on the rotor metal discs which are attached to the rotor with non-conducting non-magnetic strap plates. The safety of magnets' attachment is secured by an additional bandage made of non-magnetic material.

### Subject matter of the invention

A new method and the equipment were developed for bonding segment magnets to the inner casing of the rotor body. The bonding of magnets is fast and safe without the need for additional gripping and the equipment for automatic bonding of segment magnets can be used repeatedly for other rotors.

The equipment comprises the basic magnetic cylinder onto which the positioning cylinder is slipped on; this positioning cylinder is advantageously provided with grooves in which the segment magnets are installed. Due to the magnetic force of the basic magnetic cylinder acting through the positioning cylinder, the segment magnets can be firmly attached to the positioning cylinder. The bonding cement is applied to the outer surface of the segment magnets. Then this assembly of the basic magnetic cylinder and the positioning cylinder with the segment magnets already covered with bonding cement is inserted into the rotor body and the basic magnetic cylinder is pulled out. This will cause the magnetic force acting on segment magnets holding them on the positioning cylinder to disappear and then the magnetic force of the rotor will start acting which will cause the segment magnets to skip over into the inner casing of the rotor as they are attracted to the rotor body.

The equipment used for bonding the segment magnets therefore comprises the basic magnetic cylinder, the positioning cylinder, the rotor body, which is to be fitted with magnets, and, advantageously, a guiding mechanism consisting of the support drum and a support rod that passes through the centre of these individual segments, with the one end of the support rod attached to the bottom of the support drum to which the rotor body is attached with the demountable joint. Along the circumference of the edge of the support drum and the rotor body, there are openings for inserting the demountable joint. The holes for inserting the demountable joint are provided along the circumference of the edge of the support drum and the rotor body. The inner casing of the support drum is advantageously provided with a stopper plate that prevents the positioning cylinder from passing through into the support drum. The other end of the support rod is joined to the basic magnetic cylinder onto which the positioning cylinder is slipped on, with the positioning cylinder being advantageously provided with grooves in which the segment magnets are installed. The height of the basic magnetic cylinder is advantageously the same as the height of the positioning roller. The basic magnetic cylinder with the positioning cylinder attached are inserted into the rotor body or, alternatively, they can be pushed along the support rod into the rotor body. The outer diameter of the basic magnetic is smaller than the inside diameter of the support drum so that it can be inserted into the support drum during the bonding operation. The basic magnetic cylinder can be advantageously provided on one edge with a fitting, i.e. the projecting edge, extending to the edge of the positioning cylinder so as to allow to push out the positioning cylinder when moving the basic magnetic cylinder which then can be advantageously provided with a stopper plate to prevent the segment magnets to be deflected from the positioning cylinder.

The process for bonding segment magnets can be divided into several consecutive stages. In the first stage, segment magnets are installed on the outer casing of the positioning cylinder side by side with alternating poles or according to the requirements of the selected generator. Advantageously, the magnets can be installed in the grooves formed on the outer casing of the positioning cylinder. Segment magnets can be used in a variety of sizes and can be installed in multiple rows one above the other. The positioning cylinder is slipped onto the basic magnetic cylinder. The magnetic force acting between the segment magnets and the basic magnetic cylinder is directed towards the centre of the basic magnetic cylinder and keeps the segment magnets on the positioning cylinder stationary, so that the space between the basic magnetic cylinder and the positioning cylinder remains around several tenths of millimetres, about 0.1-0.9 mm, for the magnetic force to be effective. After installing the segment magnets in the grooves, the outer surfaces of the segment magnets are coated with bonding cement.

The positioning cylinder with the basic magnetic cylinder can be advantageously attached to the support rod. After attaching the basic magnetic cylinder and the positioning cylinder to the support rod, the outer surfaces of the segment magnets are coated with bonding cement.

In the second stage, the assembly of the basic magnetic cylinder and the positioning cylinder with the segment magnets coated with bonding cement is inserted into to rotor body. After inserting the entire assembly of the basic magnetic cylinder and the positioning cylinder into the rotor body, the basic magnetic cylinder is pulled out and, following the loss of magnetic force between the basic magnetic cylinder and the segment magnets, the third stage then commences. The assembly of the basic magnetic cylinder and the positioning cylinder with the segment magnets can be advantageously pushed along the support rod which is anchored to the bottom of the support drum. Segment magnets are driven into the stopper plate of the support drum or, alternatively, the edge of positioning cylinder is jammed into the edge of the support drum so that the positioning cylinder cannot be inserted any further into the support drum. Only the basic magnetic cylinder continues to be pushed towards the bottom of the support drum and, following the loss of magnetic force between the basic magnetic cylinder and the segment magnets, so the third stage then commences.

In the third stage, the segment magnets start moving away from the positioning cylinder as they are attracted towards the inner wall of the rotor body. The space between the segment magnets and the inner wall of the rotor body must be as small as possible, in the order of tenths of millimetres, to ensure that the magnets are moved without being deflected. After pushing almost the entire basic magnetic cylinder out of the rotor or, alternatively, into the support drum, the magnetic force between the segment magnets and the basic magnetic cylinder completely disappears and the segment magnets coated with the bonding cement are magnetically drawn and attached to the inner casing of the rotor body.

When the bonding cement becomes hard, the final fourth stage will commence, in which the positioning cylinder is removed from the rotor and this makes the rotor ready to use. Alternatively, the basic magnetic cylinder is being pushed from the support drum in the opposite direction into the positioning cylinder and the positioning cylinder together with the basic magnetic cylinder are pushed out of the rotor body by means of the fitting formed on the basic magnetic cylinder. The other alternative is to remove the demountable joint between the support drum and the rotor body, with the basic magnetic cylinder removed from inside the support drum and together with the positioning cylinder and the rotor body then pushed out along the support rod. At the end of the individual stages, the basic magnetic cylinder and the positioning cylinder are again ready for further installation of segment magnets and the rotor body is released in the demountable joint from the support drum.

### List of figures on the drawings

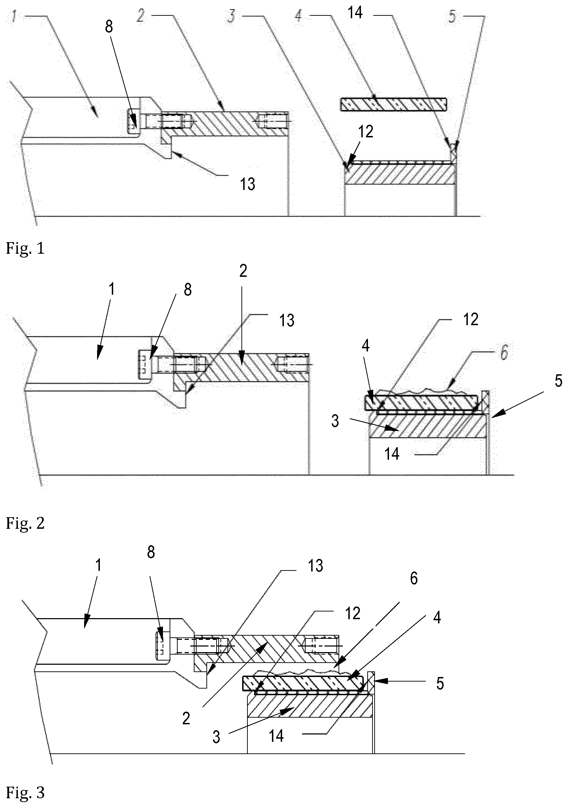

- Fig. 1:: Stage 1 - Fixing segment magnets to the positioning cylinder installed on the basic magnetic cylinder, shown in section
- Fig. 2:: Stage 1 - Coating segment magnets with the bonding cement, shown in section
- Fig. 3:: Stage 2 - Inserting the positioning cylinder with segment magnets and the basic magnetic cylinder into the rotor body, shown in section

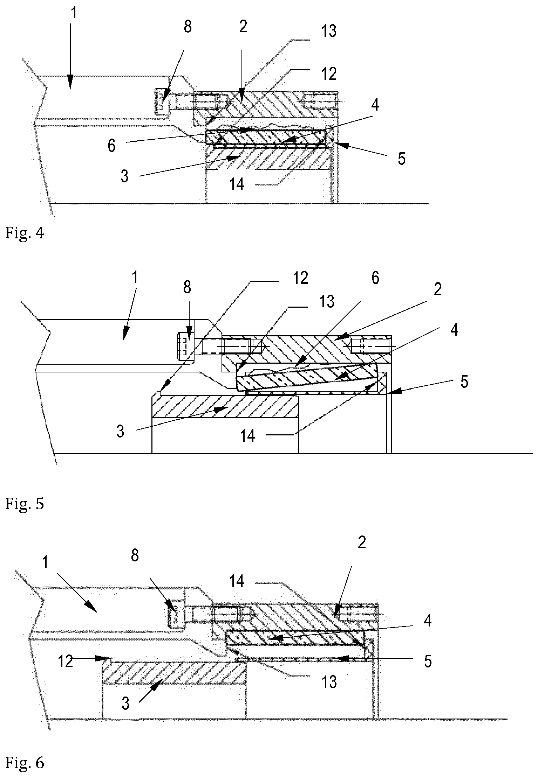

- Fig. 4:: Stage 2 - Full insertion of the positioning cylinder with segment magnets and the basic magnetic cylinder into the rotor body, shown in section
- Fig. 5:: Stage 3 - Pushing the basic magnetic cylinder into support drum and disrupting the magnetic force between the basic magnetic cylinder and the segment magnets, shown in section
- Fig. 6:: Stage 3 - Insertion of the entire basic magnetic cylinder into the support drum and adhesion of magnets to inner casing of the rotor body, shown in section

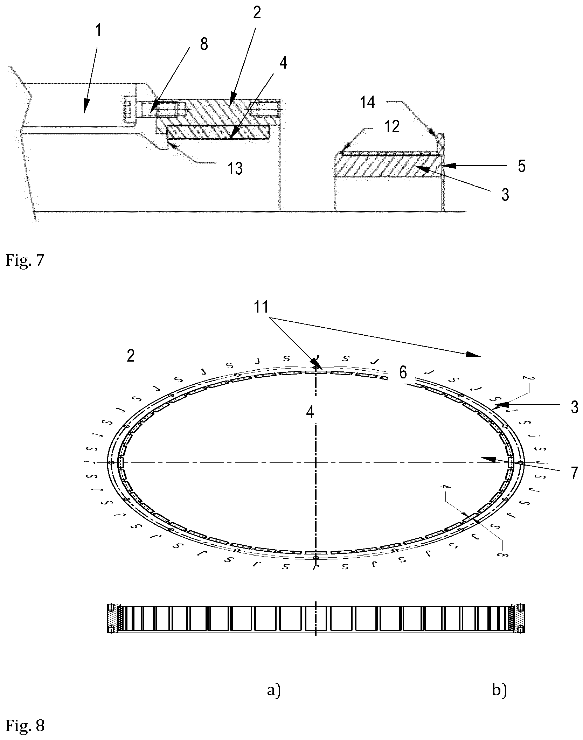

- Fig. 7:: Stage 4 - Segment magnets bonded in the inner casing of the rotor body and the assembly of the basic magnetic cylinder and the positioning cylinder prepared ready for further use, shown in section
- Fig. 8:: a) Section of the cross-section of the rotor body with the bonded segment magnets, shown in section b) The surface of the positioning cylinder with the formed grooves

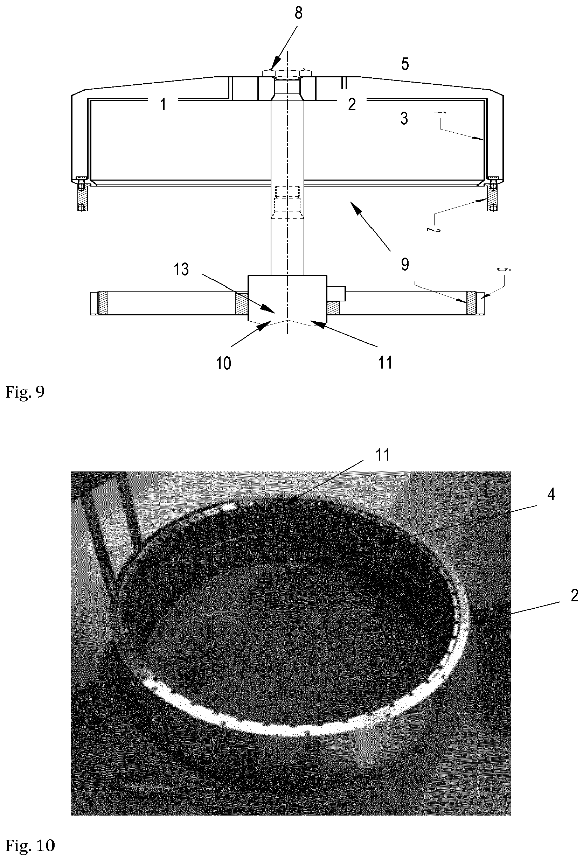

- Fig. 9:: Cross-section of the prepared components (from the left: support drum, rotor body and basic magnetic cylinder with positioning cylinder) on the support rod, shown in section
- Fig. 10:: Rotor body with bonded segment magnets

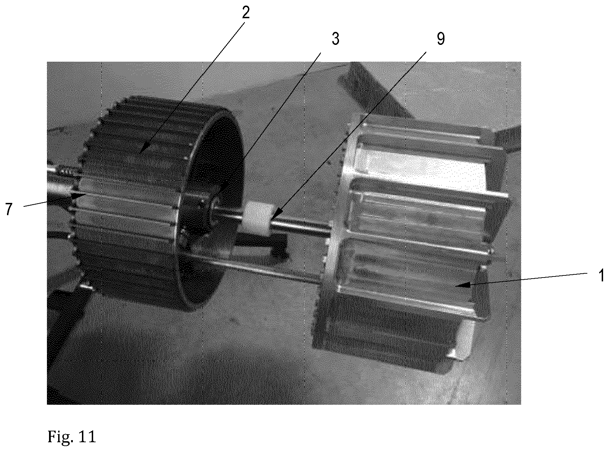

- Fig. 11:: Support drum and positioning cylinder with basic magnetic cylinder on the support rod

### Example

### Example 1

The bronze positioning cylinder 5 with the diameter of 28.95 cm and the edge 1 cm wide, which was provided with 48 grooves 7 around the entire circumference for installing the segment magnets 4, was fitted on the steel basic magnetic cylinder 3 with the diameter of 27.90 cm and the edge 2 cm wide. Both the basic magnetic cylinder 3 and the positioning cylinder 5 were 10 cm high. The iron segment magnets 4 9.5 cm long were installed in the grooves 7; there were a total of 48 magnets installed side by side with alternating poles. After installing segment magnets 4 in the grooves 7, the Loctite bonding cement 6 was applied to the entire surface of each of the magnets 4 with the brush. After coating the outer surface of the segmented magnets 4 with the bonding cement 6, the assembly of the positioning cylinder 5 with segment magnets 4 and the base magnetic cylinder 3 was inserted into the duralumin rotor body 2 with the diameter of 31 cm and the height of 10 cm. After continuous re-insertion of only the basic magnetic cylinder 3 into the rotor body 2, the segment magnets 4 started detaching themselves from the grooves 7 on the positioning cylinder 5 and sticking themselves to the inner wall of the rotor body. After pulling the entire basic magnetic cylinder 3 out of the rotor body 2, the positioning cylinder 5 was removed from the rotor body. This way, the duralumin rotor body 2 with 48 internal segment magnets 4 was assembled using only the bonding cement.

### Example 2

A 150 cm long support rod 9 was attached to the centre of the bottom of the support drum 1 and connected to the hydraulic system. A total of 12 openings 10 with the diameter of 7 mm for the demountable joint 8 of the support drum 1 were made along the entire circumference of 3 cm wide edge of the support drum 1 with the diameter of 35 cm and the height of 25 cm. A 2 cm plastic stop, i.e. a stopper plate 13, which protruded into the interior of the support drum 1, was bonded to the edge of the support drum 1. Using the demountable joint 8 consisting of screws, the duralumin rotor body 2 with the diameter of 34 cm and the height of 15 cm, and with 12 openings 11 for the threaded demountable joint 8 with the diameter of 7 mm for the rotor body 2, which were made in 2 cm wide edge of its inner casing, was attached to the support drum 1. A plastic positioning cylinder 5, with a diameter of 31.98 cm and the edge 1 cm wide, was fitted onto the iron basic magnetic cylinder 3 with a diameter of 30.95 cm and an edge width of 2 cm. Both the basic magnetic cylinder 3 and the positioning cylinder 5 were 20 cm high. The 6 cm long segment magnets 4 made of neodymium were installed on the casing of the positioning cylinder 5 in two rows one above the other, with the adjoining segment magnets 4 having alternating poles; a total of 96 of these magnets were attached to the casing of the positioning cylinder 5. After installing segment magnets 4 on the casing of the positioning cylinder 5, the Loctite bonding cement 6 was applied to the entire surface of each of the magnets 4 with the coating pistol. After coating the entire surface of each of the segment magnets 4 with bonding cement 6, the hydraulic system was switched on and the assembly of the positioning cylinder 5 with the segment magnets 4 and the basic magnetic cylinder 3 started to move into the rotor body 2. After inserting the entire basic magnetic cylinder 3 and the positioning cylinder 5 into the rotor body 2, the edge of the positioning cylinder 5 was jammed into the plastic stop, i.e. a stopper plate 13, of the support drum 1 and only the steel basic magnetic cylinder 3 was inserted further into the support drum 1. After inserting 70% of the basic magnetic cylinder 3 into the support drum 1, the segment magnets 4 started being detached from the grooves 7 on the positioning cylinder 5 and were attached to the inner wall of the rotor body. After inserting the entire basic magnetic cylinder 3 into the support drum 1, the hydraulic system was stopped and after 10 minutes the joint 8, consisting of screws between the rotor body 2 and the support drum 1, was unscrewed and the basic magnetic cylinder 3 was removed from the inside of the support drum 1 and the positioning cylinder 5 was removed from the inside of the rotor body 2. This way, the duralumin rotor body 2 with 48 internal segment magnets 4 was assembled using only the bonding cement.

### Example 3

A 180 cm long support rod 9 was attached to the centre of the bottom of the support drum 1 and connected to the hydraulic system. A total of 14 openings 10 with the diameter of 8 mm for the demountable joint 8 of the support drum 1 were made along the circumference of 3 cm wide edge of the support drum 1 with the diameter of 40 cm and the height of 25 cm. Two opposed stops, i.e. stopper plates 13 10 cm long were formed from the edge of the support drum 1, which protruded into the body of the support drum 1. Using the demountable joint 8 consisting of screws, the duralumin rotor body 2 with the diameter of 38 cm and the height of 15 cm, and with 14 openings 11 for the threaded demountable joint 8 with the diameter of 8 mm for the rotor body 2, which were made in 2 cm wide edge of its inner casing, was attached to the support drum 1. The steel basic magnetic cylinder 3 with the diameter of 34.92 cm has a fitting 12, which was formed from its edge 2 cm wide, with the diameter which is 0.5 cm larger than the diameter of the basic magnetic cylinder 3. A bronze positioning cylinder 5, with a diameter of 35.97 cm and the edge 1 cm wide, which was provided with 48 grooves 7 side by side around its circumference for installing the segment magnets 4, was fitted onto the basic magnetic cylinder 3. The basic magnetic cylinder 3 was 15 cm high and the positioning cylinder 5 was 14.5 cm high. The 5 cm long segment magnets 4 made of neodymium were installed in the grooves one above the other in three rows, with altogether 48 magnets side by side in each row with alternating poles. After installing segment magnets 4 in the grooves 7, the Loctite bonding cement 6 was applied to the entire surface of each of the magnets 4 with the coating pistol. After coating the surfaces of the segment magnets 4 with bonding cement 6, the hydraulic system was switched on and the assembly of the positioning cylinder 5 with the segment magnets 4 and the basic magnetic cylinder 3 started to move into the rotor body 2. After inserting the entire basic magnetic cylinder 3 and the positioning cylinder 5 with segment magnets 4 into the rotor body 2, the stops, i.e. stopper plates 13 on the support drum were jammed into the positioning cylinder 5 and only the basic magnetic cylinder 3 was inserted further into the support drum 1. After inserting 60% of the basic magnetic cylinder 3 into the support drum 1, the segment magnets 4 started detaching themselves from the grooves 7 on the positioning cylinder 5 and were attached to the inner wall of the rotor body 2. After inserting the entire basic magnetic cylinder 3 into the support drum 1, the reverse run of hydraulic system was switched on after 15 minutes and the basic magnetic cylinder 3 started to move back into the rotor body 2 and, on coming to the fitting 12, was jammed into the edge of the positioning cylinder 5 and thereafter both the basic magnetic cylinder 3 and the positioning cylinder 5 were pulled out from the rotor body 2. This way, the duralumin rotor body 2 with 144 internal segment magnets 4 was assembled using only the bonding cement.

### Example 4

A 180 cm long support rod 9 was attached to the centre of the bottom of the support drum 1 and connected to the hydraulic system. 10 openings 10 with the diameter of 8 mm for the demountable joint 8 of the support drum 1 were made along the circumference of 3 cm wide edge of the support drum 1 with the diameter of 40 cm and the height of 25 cm. The edge of the support drum 1 served as a stopper plate 13 which was protruding into the inner perimeter of the body of the support drum 1. Using the demountable joint 8 consisting of screws, the duralumin rotor body 2 with the diameter of 38 cm and the height of 18 cm and with 10 openings 10 with the diameter of 8 mm for the demountable joint 8 which were made in 2 cm wide edge of its inner casing, was attached to the support drum 1. The steel basic magnetic cylinder 3 with the diameter of 34.92 cm has a fitting 12 with the diameter of 35.97 cm formed from its edge 2 cm wide. A bronze positioning cylinder 5, with a diameter of 35.97 cm and the edge 1 cm wide, which was provided with 48 grooves 7 side by side around its circumference for installing the segment magnets 4, was fitted onto the basic magnetic cylinder 3. One edge of the positioning cylinder 5 was provided the stopper plate 14 along the whole circumference of the positioning cylinder 5. The basic magnetic cylinder 3 was 20 cm high and the positioning cylinder 5 was 18.5 cm high. The 5 cm long segment magnets 4 made of neodymium were installed in the grooves one above the other in two rows, with altogether 48 magnets side by side in each row with alternating poles. After installing segment magnets 4 in the grooves 7, the Loctite bonding cement 6 was applied to the entire surface of each of the magnets 4 with the coating pistol. After coating the surfaces of the segment magnets 4 with bonding cement 6, the hydraulic system was switched on and the assembly of the positioning cylinder 5 with the segment magnets 4 and the basic magnetic cylinder 3 started to move into the rotor body 2. After inserting the entire basic magnetic cylinder 3 and the positioning cylinder 5 with segment magnets 4 into the rotor body 2, the stops, i.e. stopper plates 13, on the support drum were jammed into the segment magnets 4 which were moved up to the stopper plate 14, and only the basic magnetic cylinder 3 was inserted further into the support drum 1. After inserting 60% of the basic magnetic cylinder 3 into the support drum 1, the segment magnets 4 started being detached from the grooves 7 on the positioning cylinder 5 and were attached to the inner wall of the rotor body 2. After inserting the entire basic magnetic cylinder 3 into the support drum 1, the reverse run of hydraulic system was switched on after 10 minutes and the basic magnetic cylinder 3 started to move back into the rotor body 2 and, on coming to the fitting 12, was jammed into the edge of the positioning cylinder 5 and thereafter both the basic magnetic cylinder 3 and the positioning cylinder 5 were pulled out from the rotor body 2. This way, the duralumin rotor body 2 with 96 internal segment magnets 4 was assembled using only the bonding cement.

### List of relevant terms

- 1: support drum
- 2: rotor body
- 3: basic magnetic cylinder
- 4: segment magnet
- 5: positioning cylinder
- 6: bonding cement
- 7: groove on positioning cylinder (5)
- 8: demountable joint
- 9: support rod
- 10: openings for the demountable joint (8) of the support drum (1)
- 11: openings for the demountable joint (8) of the rotor body (2)
- 12: fitting of the basic magnetic cylinder (3)
- 13: stopper plate of the support drum (1)
- 14: stopper plate of the positioning cylinder (5)

### Industrial applicability

A method of bonding magnets to allow easy and above all automatic adhesion of magnets into the rotor body of the generator.

## Claims

1. An equipment for bonding segment magnets to an inner casing of a rotor body (2) ***is characteristic in that*** it consists of a basic magnetic cylinder (3) onto which a positioning cylinder (5) is fitted on, wherein the inner diameter of the positioning cylinder (5) being 0.1-0.9 mm larger than the diameter of the basic magnetic cylinder (3) and the outer diameter of the positioning cylinder (5) being 0.1-0.9 mm smaller than the inner diameter of the rotor body (2).

2. The equipment for bonding segment magnets to the inner casing of the rotor body (2) according to Claim 1 ***is characteristic in that*** the positioning cylinder (5) is on the outer casing provided with grooves (7) for aligning the magnets inserted.

3. The equipment for bonding segment magnets to the inner casing of the rotor body (2) according to Claim 1 ***is characteristic in that*** the basic magnetic cylinder (3) is attached to a support rod (9).

4. The equipment for bonding segment magnets to the inner casing of the rotor body (2) according to Claim 1 ***is characteristic in that*** the rotor body (2) is attached to the support drum (1) with the demountable joint.

5. The equipment for bonding segment magnets to the inner casing of the rotor body (2) according to Claim 3 ***is characteristic in that*** the support rod (9) is anchored to the centre of the support drum (1).

6. The equipment for bonding segment magnets to the inner casing of the rotor body (2) according to Claim 1 ***is characteristic in that*** the basic magnetic cylinder (3) is made of steel.

7. The equipment for bonding segment magnets to the inner casing of the rotor body (2) according to Claim 1 ***is characteristic in that*** the positioning cylinder is made of bronze.

8. The equipment for bonding segment magnets to the inner casing of the rotor body (2) according to Claim 2 ***is characteristic in that*** 48 grooves have been formed along the outer diameter of the positioning cylinder (5).

9. The equipment for bonding segment magnets to the inner casing of the rotor body (2) according to Claim 1 ***is characteristic in that*** the outer diameter of the positioning cylinder (5) with segment magnets (4) is 0.5 cm smaller than the inner diameter of the rotor body (2).

10. The equipment for bonding segment magnets to the inner casing of the rotor body (2) according to Claim 1 ***is characteristic in that*** the edge of the basic magnetic cylinder (3) is provided with the fitting (12).

11. The equipment for bonding segment magnets to the inner casing of the rotor body (2) according to Claim 1 and Claim 3 ***is characteristic in that*** the inner casing of the support drum (1) is provided with the stopper plate (13) of the support drum (1).

12. The equipment for bonding segment magnets to the inner casing of the rotor body (2) according to Claim 1 ***is characteristic in that*** the edge of the positioning cylinder (5) is provided with the stopper plate (14).

13. A method for bonding segment magnets to the inner casing of the rotor body (2) using the equipment according to Claim 1 *is **characteristic in that*** the segment magnets (4) are installed in the grooves (7) on the positioning cylinder (5), their external surface is coated with bonding cement (6), the basic magnetic cylinder (3) and the positioning cylinder (5) with segment magnets (4) are inserted into the rotor body (2), the basic magnetic cylinder (3) is then pulled out and, subsequently, the positioning cylinder (5) is pulled out.

14. The method for bonding segment magnets to the inner casing of the rotor body (2) according to Claim 12 ***is characteristic in that*** the basic magnetic cylinder (3) and the positioning cylinder (5) are pushed along the support rod (9).

15. The method for bonding segment magnets to the inner casing of the rotor body (2) according to Claim 14 ***is characteristic in that*** the basic magnetic cylinder (3) and the positioning cylinder (5) are driven along the support rod (9) by the hydraulic system.

16. The method for bonding segment magnets to the inner casing of the rotor body (2) according to Claim 12 ***is characteristic in that*** the segment magnets (4) are installed in the grooves (7) on the positioning cylinder (5) with alternating poles.

17. The method of bonding segment magnets into the inner casing of the rotor body (2) according to claims 12 and 14 ***is characteristic in that*** the segment magnets (4) are inserted in the positioning cylinder grooves (7) in two rows.
